# EUROPÄISCHE PATENTSCHRIFT

(11) **EP 2 179 832 B1**
(45) Veröffentlichungstag und Bekanntmachung des Hinweises auf die Patenterteilung: **01.10.2014**
(21) Anmeldenummer: 09013146.7
(22) Anmeldetag: 19.10.2009
(51) Int. Cl.: B29C 45/56, B29C 45/16

(54) **Verfahren zur Herstellung eines Innenverkleidungsteils**
Method for making an interior trim panel
Procédé de fabrication d'un élément d'habillage intérieur

(30) Priorität: 23.10.2008 AT 16572008
(43) Veröffentlichungstag der Anmeldung: 28.04.2010
(73) Patentinhaber: Intier Automotive Eybl GmbH (Ebergassing) & Co. OHG, 2435 Ebergassing (AT)
(72) Erfinder: Eiweck, Konrad, 7000 Eisenstadt (AT); Walter, Wolfgang, 2440 Gramatneusiedl (AT); Mitrowitz, Manfred, 7083 Purbach (AT); Vlasits, Roman, 7013 Klingenbach (AT)
(74) Vertreter: Völger, Silke Beatrix

(56) Entgegenhaltungen:
- EP-A1- 0 712 759
- DE-A1- 19 505 155

## Beschreibung

Die vorliegende Erfindung betrifft ein Verfahren zur Herstellung eines als Verbundbauteil ausgebildeten Innenverkleidungsteils für Kraftfahrzeuge, sowie nach dem Verfahren herstellbares Innenverkleidungsteil.

Aus der DE 195 05 155 A1 ist bereits ein Verfahren zum Herstellen eines Auskleidungsteils aus Kunststoff bekannt, das in zwei Bereichen der Sicht -und Rückseite aus unterschiedlichen Materialien besteht. Bei diesem bekannten Verfahren wird ein vorgeformter Zuschnitt aus beispielsweise Kunststofffolie in einem ersten Verfahrensschritt in einen ersten Bereich einer Spritzgießform eingelegt und hinterspritzt. In einem anschließenden Verfahrensschritt wird an den Randbereich des hinterspritzten Teils in einem zweiten Bereich Kunststoff angeformt.

Bei neueren Fahrzeugen wird immer größerer Wert auf eine qualitativ hochwertige Innenausstattung mit hochwertig dekorierten Bauteilen gelegt. Ein nach dem bekannten Verfahren hergestelltes Innenverkleidungsteil genügt diesen Anforderungen häufig nicht.

Aufgabe der vorliegenden Erfindung ist es daher, ein Verfahren zur Herstellung eines Innenverkleidungsteils als Verbundbauteil derart weiterzubilden, dass das Verfahren einfach und kostengünstig durchführbar und das mit dem Verfahren herstellbare Innenverkleidungsteil qualitativ hochwertig ist.

Diese Aufgabe wird dabei durch die im Anspruch 1 bzw. Anspruch 6 angegebenen Merkmale gelöst. Das angegebene Verfahren zeichnet sich insbesondere dadurch aus, dass in einem Herstellverfahren unterschiedliche Dekore erzeugt werden können.

Weitere vorteilhafte Ausgestaltungen und Weiterbildungen des erfindungsgemäßen Verfahrens ergeben sich aus den Unteransprüchen.

Eine bevorzugte Ausführungsform des erfindungsgemäßen Sitzpolsters wird nachfolgend beispielshalber beschrieben, wobei veranschaulichend auf die beigefügten Zeichnungen Bezug genommen wird.

Es zeigt:
Fig.1 eine Ansicht einer Türinnenverkleidung als Innenverkleidungsteil.

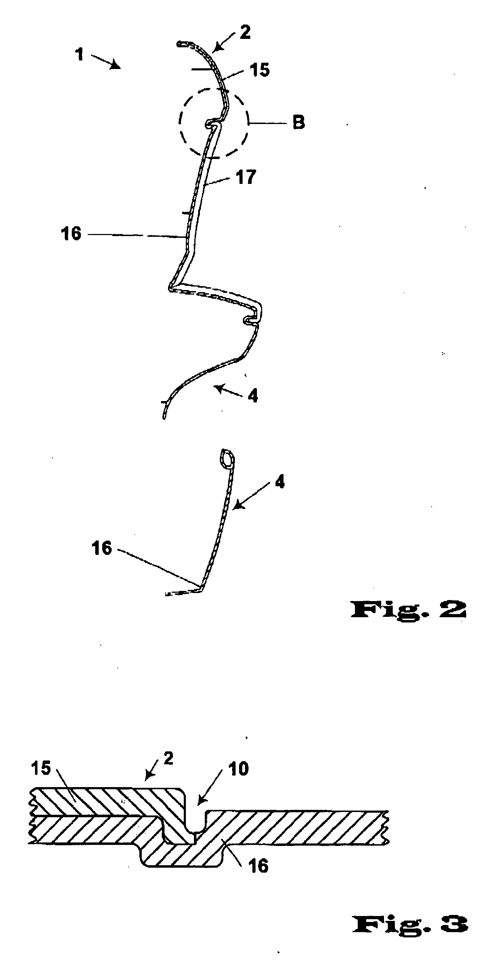

Fig.2 eine Schnittdarstellung des Innenverkleidungsteils längs der Schnittlinie A-A in Fig.1,
Fig.3 eine vergrößerte Detailansicht der nutartig vertieften Verbindungsstelle von Bereichen unterschiedlicher Werkstoffe gemäß Detail B in Fig. 2,
Fig.4 die Detailansicht gemäß Fig. 3 mit aufkaschiertem Dekor in einem Bereich sowie der Verbindungsstelle, und
Fig.5 eine Werkzeugform in geöffnetem Zustand mit eingelegtem vorgeformten Zuschnitt in Schnittdarstellung.

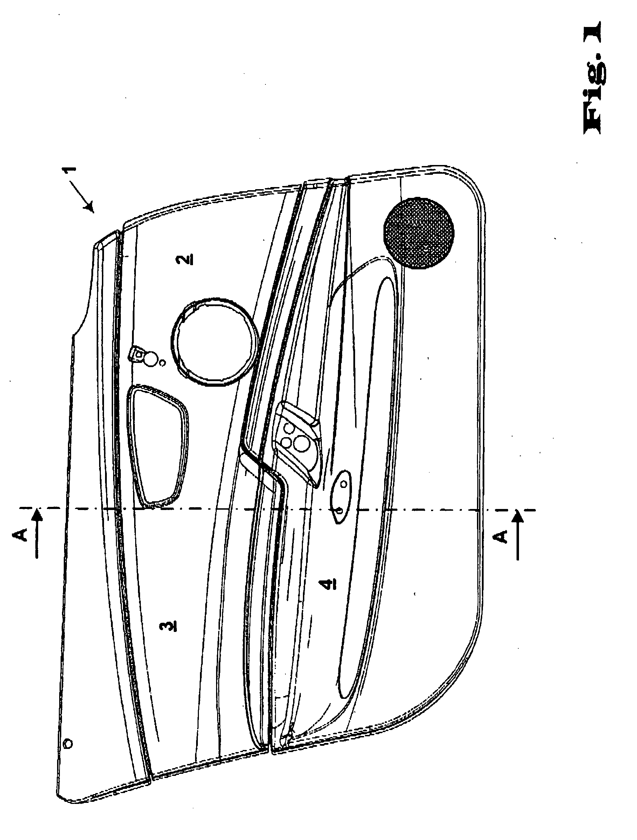

Fig. 1 zeigt ein nach dem erfindungsgemäßen Verfahren hergestelltes Türinnenverkleidungselement. Das als Verbundbauteil ausgebildete Innenverkleidungselement 1 umfasst dabei einen formstabilen Kunststoffträger 16 und weist eine sichtseitige Dekorfläche auf. Die sichtseitige Dekorfläche ist dabei in drei Bereiche unterschiedlicher Oberflächenbeschaffenheit aufgeteilt. Aus der Schnittdarstellung der Fig. 1 kann man erkennen, dass der als Fensterbrüstungsbereich bezeichnete erste Bereich 2 eine Kunststofffolie als flaches Dekormaterial aufweist. In diesem im Blickfeld befindlichen Bereich des Türinnenverkleidungselements ist ein besonders hochwertiges Dekor vorgesehen. Der an diesen ersten Bereich anschließende dritte Bereich 3, der den Armauflagebereich mit umfasst, besteht als Dekormaterial aus einem Dekorstoff, Leder oder Kunstleder. Das Dekormaterial 17 wird bei der Herstellung des Innenverkleidungsteils, wie es nachfolgend noch näher erläutert wird, auf einen dritten Abschnitt des Kunststoffträgers 16 aufkaschiert. Im Armauflagebereich kann dadurch eine ansprechende Haptik erzielt werden. Ein an den dritten Bereich angrenzender Bereich, der als zweiter Bereich 4 bezeichnet wird, weist als Oberfläche eine dekorative Oberfläche des Kunststoffträgers 16 auf. Dies kann beim Spritzgießverfahren durch entsprechende Gestaltung der Oberflächenstruktur der oberen Formhälfte erfolgen. Der zweite Bereich 4 ist im Wesentlichen in der unteren Hälfte des Türinnenverkleidungselements angeordnet, die die Türablage mit umfasst. Dieser Bereich liegt nicht im direkten Sichtfeld des Benutzers. Es kann daher für diesen Bereich ein Material bzw. eine Oberfläche ausgewählt werden, das kostengünstig ist.

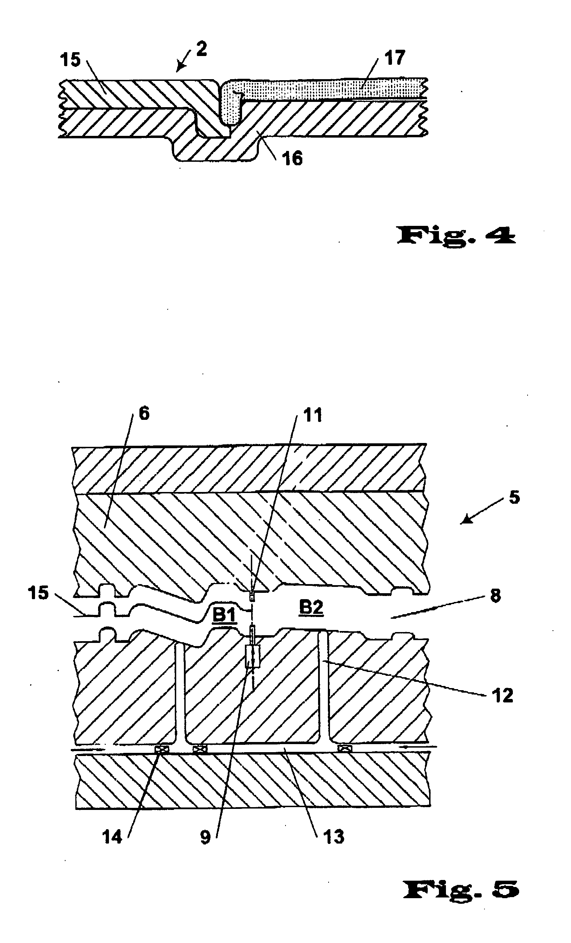

Das erfindungsgemäße Verfahren zur Herstellung eines Innenverkleidungsteils 1 als Verbundbauteil umfasst drei Verfahrensteile, nämlich einen Tiefzieh- oder Thermoformverfahrensteil, einen Hinterspritz- oder Hinterpressverfahrensteil und einen Kaschierverfahrensteil. Der Hinterspriwerfahrensteil wird nachfolgend anhand der in Fig. 5 in einer Schnittdarstellung für diesen Verfahrensteil geeigneten Werkzeugform 5 beschrieben. Der in Fig. 5 gezeigte Ausschnitt der Werkzeugform besteht im Wesentlichen aus einer oberen Formhälfte 6 und einer unteren Formhälfte 7, die in einer geöffneten Stellung der Werkzeugform 5 beabstandet zueinander angeordnet sind. Zwischen den Formhälften 6, 7 befindet sich eine Kavität 8, die wie es aus der Darstellung in der Zeichnung ersichtlich ist, über ein Trennelement 9 in einen ersten und einen zweiten Bereich B1, B2 getrennt werden kann. Das Trennelement 9 ist in der unteren Formhälfte 7 in Richtung auf die obere Formhälfte 6 verschlebbar gelagert. Der Bereich zwischen dem ersten und zweiten Bereich B1, B2 wird in dem fertig gestellten Innenverkleidungsteil als Nut 10 ausgebildet, die einen rechteckigen Querschnitt aufweist. Hierfür weist die obere Formhälfte 6 einen auf das Trennelement 9 weisenden stegförmigen Vorsprung 11 auf. Wie bereits obenstehend beschrieben zeigt die Fig. 5 nur einen Ausschnitt der Werkzeugform 5. Zur Herstellung des erfindungsgemäßen Innenverkleidungsteils, das mehrere Abschnitte umfasst, muss die Kavität 8 der Werkzeugform in eine Vielzahl Abschnitte abtrennbar ausgestaltet sein. Entlang benachbarter Randkanten des zweiten Abschnitts und der weiteren Abschnitte sind in dem fertig gestellten Trägerteil 16 Nuten enthalten. Hierzu weist die Werkzeugform entsprechend angeordnete Trennelemente und mit den Trennelementen zusammenwirkende Trennstege auf.

In die untere Werkzeugform 7 sind eine Vielzahl von Bohrungen 12 eingebracht, die ausgehend von einer Zuführbohrung 13 für das Hinterspritzmaterial in die Bereiche B1, B2 usw. der Kavität 8 münden. Die Zuführbohrung 13 weist zur Dosierung des Hinterspritzmaterials Ventile 14 auf. Das Dosiersystem ist allgemein bekannt und wird daher nicht näher beschrieben.

In einem Tiefzieh- oder Thermoformverfahrensteil wird in einem ersten Schritt ein erster Zuschnitt 15 eines flachen Dekormaterials in die Gestalt der Dekorfläche des ersten Bereichs 2 vorgeformt.

Ein formstabiles Trägerteil 16 aus Kunststoff wird anschließend in einem Hinterspritz- oder Hinterpressverfahrensteil erzeugt, welches drei Abschnitte umfasst. Entlang der Randkanten benachbarter Abschnitte ist jeweils eine Nut vorgesehen.

Hierzu wird in dem ersten Bereich B1 der Werkzeugform 5 der vorgeformte Zuschnitt 15 beispielsweise eine Kunststofffolie angeordnet. Der vorgeformte Zuschnitt 15 ist in seiner Formgebung der Kontur der Formhälften 6, 7 im ersten Bereich B1 angepasst und wird in den ersten Bereich B1 eingebracht und in seinem Randbereich mittels des Trennelements 9 in seiner Position fixiert. Hierzu wird das Trennelement 9 auf die Anlagefläche des stegförmigen Vorsprungs 11 verschoben. Die Fixierung des vorgeformten Zuschnitts 15 mittels des Trennelementes 9 bewirkt gleichzeitig eine Abtrennung des ersten und zweiten Bereichs B1, B2.

Während einer ersten Phase des Schließens der Werkzeugform 5 wird in den rückseitigen, der unteren Formhälfte 7 zugewandten Bereich des vorgeformten Zuschnitts 15 Thermoplastischer Kunststoff als Hinterspritzmaterial eingebracht und der erste Abschnitt des Trägerteils 16 erzeugt. Beim weiteren Schließen der Werkzeugform 5 wird das Trennelement 9 betätigt und wieder in die untere Formhälfte 7 eingefahren. Die Trennung der Bereiche B1, B2 ist somit wieder aufgehoben. Der dritte Abschnitt des Trägerteils wird erzeugt, welcher mit einer flächigen Ausnehmung versehen ist.

Nach Erreichen der Endschließstellung wird abschließend der zweite Abschnitt erzeugt. Hierzu wird in den verbleibenden Raum der Kavität 8 Hinterspritzmaterial über die Zuführbohrung 13 und weiteren Bohrungen 12 eingespritzt.

In einem abschließenden Kaschierverfahrensteil wird auf die flächige Ausnehmung des dritten Abschnitts 3 des innenverkleidungsteils 1 ein flaches Dekormaterial 17 aufkaschiert. Als Dekormaterial 17 werden vorzugsweise Dekorstoffe, Leder, Kunstleder oder vernähte Kombinationen dieser Materialien verwendet. Beim Aufkaschieren wird jeweils ein Umschlag von Randstücken des Dekormaterials 17 in den Nuten des formstabilen Trägerteils untergebracht. Dadurch ergibt sich im Bereich der Übergänge zwischen dem dritten Bereich 3 der Oberfläche und dem ersten und/oder dem zweiten Bereich 2, 4 der Oberfläche eine einwandfreie Übergangslinie in der Erscheinung des Innenverkleidungsteils.

## Patentansprüche

1. Verfahren zum Herstellen eines als Verbundbauteil ausgebildeten Innenverkleidungsteils für Kraftfahrzeuge mit einem formstabilen Kunststoffträger und einer sichtseitigen Dekorfläche, die Bereiche (2, 3, 4) unterschiedlicher Oberflächenbeschaffenheiten aufweist, umfassend
einen Tiefzieh- oder Thermoformverfahrensschritt, worin ein erster Zuschnitt (15) eines flachen Dekormaterials in die Gestalt der Dekorfläche des ersten Bereichs (2) vorgeformt wird,
einen Hinterspritz- oder Hinterpressverfahrensschritt, worin ein formstabiles Trägerteil (16) aus Kunststoff erzeugt wird, das in einem ersten Abschnitt mit dem vorgeformten Zuschnitt (15) verbunden ist, in einem zweiten Abschnitt eine dekorative Oberfläche aufweist, die den zweiten Bereich (4) der Dekorfläche bildet, in einem dritten Abschnitt mit einer flächige ausgebildete Ausnehmung versehen ist und entlang der benachbarten Randkanten zwischen dem dritten Abschnitt und den weiteren Abschnitten jeweils eine Nut (10) in dem formstabilen Trägerteil (16) enthält,
wobei in dem Hinterspritz- oder Hinterpressverfahrensschritt durch Spritzprägen der erste und der dritte Abschnitt des formstabilen Trägerteils 16 erzeugt werden, und wobei am Anfang der Schließbewegung des Formwerkzeugs (5) der erste Abschnitt und während des weiteren Schließens des Formwerkzeugs (5) der dritte Abschnitt erzeugt werden, und
wobei nach dem Schließen des Werkzeugs in einem Spritzgießverfahren der zweite Abschnitt erzeugt wird, und
wobei des Weiteren ein Kaschierverfahrensschritt vorgesehen ist, worin ein zweiter Zuschnitt (17) eines weiteren flachen Dekormaterials in der flächige ausgebildeten Ausnehmung des formstabilen Trägerteils (16) angeordnet und befestigt wird.

2. Verfahren nach Anspruch 1, worin in dem Kaschierverfahrensteil ein Umschlag von einem Randstück des Zuschnitts (17) in der Nut (10) des formstabilen Trägerteils (16) untergebracht wird.

3. In einem Verfahren nach einem der Ansprüche 1 bis 2 herstellbares und als Verbundbauteil ausgebildetes Innenverkleidungsteil für Kraftfahrzeuge, das zur Abdeckung der Innenseite einer Fahrzeugtüre oder einer Fahrzeugwand vorgesehen ist, wobei ein als erster Bereich (2) mit dem Zuschnitt des ersten Dekormaterials herstellbarer Abschnitt eine Fensterbrüstung umfasst und ein als dritter Bereich (4) mit einem zweiten Zuschnitt (17) aus einem flachen Dekormaterial herstellbarer Abschnitt eine Armauflage ausbildet.

4. Als Verbundbauteil ausgebildetes Innenverkleidungsteil für Kraftfahrzeuge nach Anspruch 3, wobei der zweite Zuschnitt (17) aus einem Dekorstoff, Leder, Kunstleder oder einer vernähten Verbindung aus Zuschnitten dieser Materialien gebildet ist.

5. Als Verbundbauteil ausgebildetes Innenverkleidungsteil für Kraftfahrzeuge nach Anspruch 3 oder 4, wobei der zweite Zuschnitt (17) mit einem warmhärtenden Klebstoff in der Ausnehmung befestigt ist.

## Claims

1. Method for making an interior trim panel, formed as a composite component, for motor vehicles, with a dimensionally stable plastic backing and a decorative face on the visible side, which has regions (2, 3, 4) of differing surface characteristics, comprising
a deep-drawing or thermoforming method step, in which a first blank (15) of a flat decorative material is preformed into the shape of the decorative face of the first region (2),
an insert-moulding or in-mould laminating method step, created in which is a dimensionally stable backing part (16) of plastic, which in a first portion is connected to the preformed blank (15), in a second portion has a decorative surface, which forms the second region (4) of the decorative face, in a third portion is provided with a flat-formed recess and along the neighbouring peripheral edges between the third portion and the further portions respectively contains a groove (10) in tho dimoncionally otablo backing part (16),
wherein the first and third portions of the dimensionally stable backing part (16) are created in the insert-moulding or in-mould laminating method step by injection-compression moulding, and
wherein the first portion is created at the beginning of the closing movement of the mould (5) and the third portion is created during the further closing of the mould (5), and
wherein, after the closing of the mould, the second portion is created in an injection-moulding process, and
wherein furthermore a laminating method step is provided, in which a second blank (17) of a further flat decorative material is arranged in the flat-formed recess of the dimensionally stable backing part (16) and secured.

2. Method according to Claim 1, in which, in the laminating part of the method, a turn-up from a peripheral piece of the blank (17) is accommodated in the groove (10) of the dimensionally stable backing part (16).

3. Interior trim panel for motor vehicles that can be made in a method according to either of Claims 1 and 2 and is formed as a composite component, which is intended for covering the inner side of a vehicle door or a vehicle wall, a portion that can be made as a first region (2) with the blank of the first decorative material comprising a window ledge and a portion that can be made as a third region (4) with a second blank (17) of a flat decorative material forming an armrest.

4. Interior trim panel, formed as a composite component, for motor vehicles according to Claim 3, the second blank (17) being formed from a decorative material, leather, imitation leather or a sewn-together combination of blanks of these materials.

5. Interior trim panel, formed as a composite component, for motor vehicles according to Claim 3 or 4, the second black (17) being secured in the recess by a heat-curing adhesive.

## Revendications

1. Procédé de fabrication d'un élément d'habillage intérieur réalisé en tant que pièce composite pour véhicules automobiles comprenant un support en plastique de forme stable et une face décorative du côté visible, qui présente des régions (2, 3, 4) ayant des états de surface différents, comprenant
une étape de procédé d'emboutissage profond ou de thermoformage, dans laquelle une première pièce découpée (15) d'un matériau décoratif plat est préformée à la forme de la face décorative de la première région (2),
une étape de procédé de pulvérisation par l'arrière ou de pressage par l'arrière, dans laquelle est produit un élément de support de forme stable (16) en plastique, qui est connecté dans une première portion à la pièce découpée préformée (15), qui présente dans une deuxième portion une surface décorative qui forme la deuxième région (4) de la face décorative, qui dans une troisième portion est pourvu d'un évidement réalisé sous forme plate et qui contient le long des arêtes de bord adjacentes entre la troisième portion et les autres portions à chaque fois une rainure (10) dans l'élément de support de forme stable (16),
dans l'étape de procédé de pulvérisation par l'arrière ou de pressage par l'arrière, la première et la troisième portion de l'élément de support de forme stable (16) sont produites par gaufrage par pulvérisation, et
au début du mouvement de fermeture de l'outil de formage (5), la première portion est produite et pendant la fermeture subséquente de l'outil de formage (5) la troisième portion est produite, et
après la fermeture de l'outil, dans un procédé de moulage par injection, la deuxième portion est produite, et
en outre une étape de procédé de contrecollage est prévue, dans laquelle une deuxième pièce découpée (17) d'un autre matériau décoratif plat est disposée et fixée dans l'évidement réalisé sous forme plate de l'élément de support de forme stable (16).

2. Procédé selon la revendication 1, dans lequel, dans l'étape de procédé de contrecollage, un retournement d'une pièce de bord de la pièce découpée (17) est placé dans la rainure (10) de l'élément de support de forme stable (16).

3. Elément d'habillage intérieur pour véhicules automobiles réalisé en tant que pièce composite et pouvant être fabriqué dans un procédé selon l'une quelconque des revendications 1 à 2, qui est prévu pour recouvrir le côté intérieur d'une porte de véhicule ou d'un panneau de véhicule, une portion, pouvant être fabriquée en tant que première région (2) avec la pièce découpée du premier matériau décoratif, comprenant un appui de fenêtre et constituant un appui pour le bras en tant que troisième région (4) avec une deuxième pièce découpée (17) constituée d'une portion pouvant être fabriquée à partir d'un matériau décoratif plat.

4. Elément d'habillage intérieur pour véhicules automobiles réalisé en tant que pièce composite selon la revendication 3, dans lequel la deuxième pièce découpée (17) est formée d'une étoffe décorative, de cuir, de cuir artificiel ou d'un assemblage cousu de pièces découpées de ces matériaux.

5. Elément d'habillage intérieur pour véhicules automobiles réalisé en tant que pièce composite selon la revendication 3 ou 4, dans lequel la deuxième pièce découpée (17) est fixée dans l'évidement avec un adhésif thermodurcissable.
